# EUROPEAN PATENT SPECIFICATION

(11) **EP 0 811 752 B1**
(45) Date of publication and mention of the grant of the patent: **06.09.2000**
(21) Application number: 96912042.7
(22) Date of filing: 29.04.1996
(51) Int. Cl.: F01D 1/28, F02C 3/05, F01D 1/22

(54) **CENTRIFUGAL GAS TURBINE**
GASTURBINE MIT VON INNEN NACH AUSSEN DURCHSTRÖMTEM RADIALRAD
TURBINE A GAZ CENTRIFUGE

(43) Date of publication of application: 10.12.1997
(73) Proprietor: Abundancia Navarro, Juan Carlos, 35017 Las Palmas de Gran Canaria (ES); Abundancia Navarro, Cristina, 35017 Las Palmas de Gran Canaria (ES); Abundancia de Santiago, Ramon, 35017 Las Palmas de Gran Canaria (ES)
(72) Inventor: ABUNDANCIA DE SANTIAGO, Ramon, E-35017 Las Palmas de Gran Canaria (ES)
(86) International application number: ES9600096
(87) International publication number: WO9702407

(56) References cited:
- EP-A- 0 348 342
- EP-A- 0 568 748
- FR-A- 740 285
- GB-A- 724 177
- GB-A- 2 169 967
- US-A- 3 726 619
- US-A- 4 118 927

## Description

This invention refers to a turbomotor as described in the preambles of claims 1 and 2.

Such a turbomotor is disclosed in FR-A-740285, which differs as follows:
- The rotors form its inner combustion chamber.
- The vanes are arranged in eight rings around the inside combustion chamber.
- One burner feeds this combustion chamber directly.
- Both rotors are applied to the power shaft.
- This device has neither the compression phase of the turbines Brayton cycle, nor regenerator.

Gas axial turbines of medium and high output are predominant, while those of low output are seldom used, due to the following limitations:
- Proportionatelly significant losses of pressure.
- Reduced efficiency of the small vanes.
- High rotors regime.
- The engine ends up being excessively bulky.

The invention attempts to resolve the problems faced by small axial turbines:
- Reduced pressure losses of the turbine.
- More efficient vanes due to their shape, size and lower number.
- A lighter engine.

A turbomotor wich meets these requirements is described in claims 1 and 2.

### Description of the drawings.

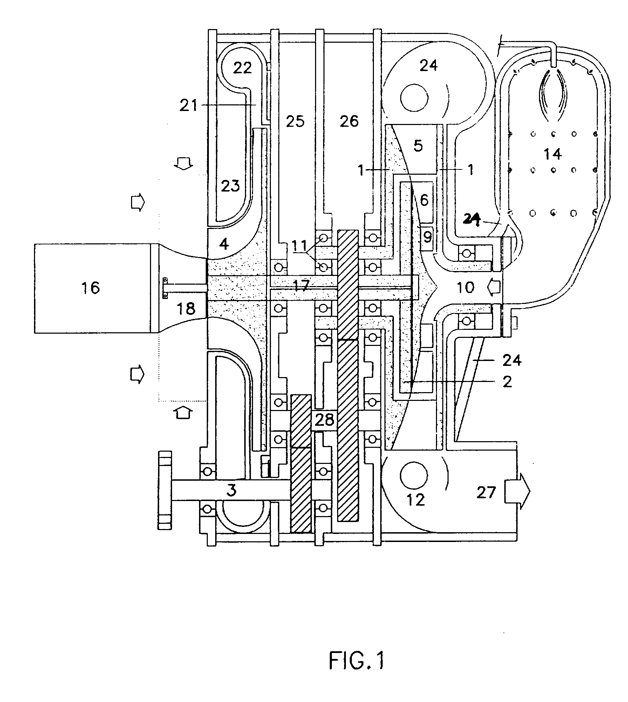

Fig.n° 1. It is a longitudinal section of the motor, with the double disk exterior of the turbine.

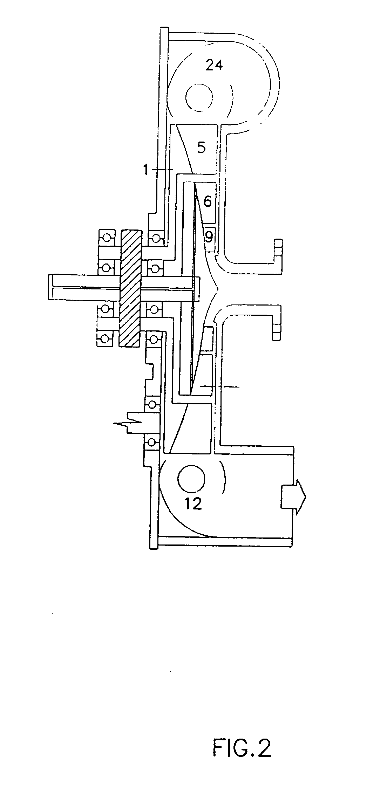

Fig.n° 2. It is a section of the turbine, with the two rotors, both of them with one disk and ring of vanes.
Fig.n° 3. It is a cross section, in which the vanes of each rotor and guiding fins can be seen. This motor is principally for means of transport.

The description explains the turbomotor invention and more especifically its turbine.
The turbine consists of an interior reaction rotor (2) , counterrotating within another exterior reaction rotor formed of the two disks, to drive the compressor (4) and power shaft (3) respectively by means of concentric shafts mounted on bearings, in the fourth motor compartment.

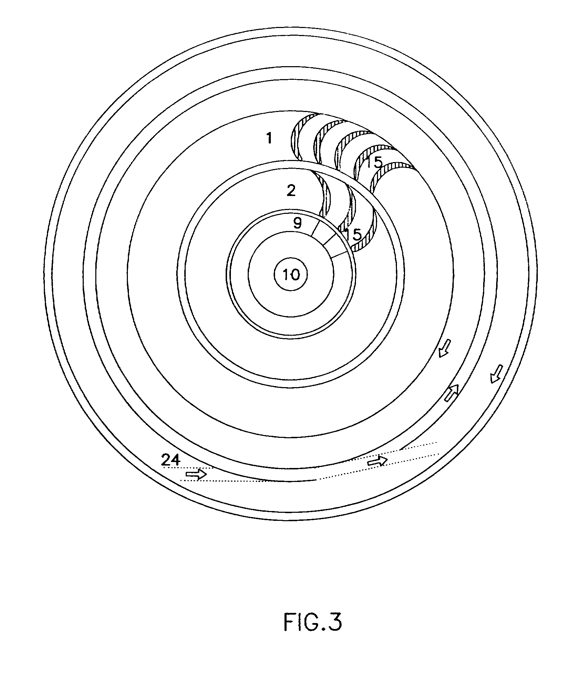

The combustor (14) is directly coupled over the central inlet (10) of the turbine to supply the centrifugal gas flow that straight fins of the interior rotor distribute the gas radially towards the vanes.
These outward-flow vanes (5 and 6) form nozzles of opposing curvature in each rotor (fig. 3,n°15)
The interior rotor is used to drive freely the compressor, while the exterior rotor drives the power shaft of the motor by means of the reducing gear (28).
The annular regenerator (24) is located in the periphery of the exterior rotor vanes in order to take up the exhausted gases which preheat the compressed air which circulates in the interior of the regenerator.
The distinctive characteristic features of the turbine are its exterior rotor of two disks (1-1) between which the ring of vanes (5) is arranged and its moving feed inlet (10) formed of the exterior disk of this rotor and also the annular regenerator.

The turbomotor can also be constructed with the turbine which distintive characteristic being its interior (2) and exterior (1) reaction rotors of only one disk and one ring of outward-flow vanes, counterrotating one within the other and mounted on bearings on their respective coaxial shafts.
This turbine's other distinctive characteristic is the feed inlet which is fixed to the crankcase, with the radial gas distribution fins fixed to the interior rotor or the crankcase. Furthermore this turbine feed system allows the flow rate required by each size of turbine

The turbine is mounted in the crankcase with the regenerator (24) and the other variable conventional components to make up the engine.
The starter motor (16) is located in the front part of the engine, connected to the compressor shaft (17) by means of the reducing gears (18).
The radial compressor (4) has a diffuser (21) of diverging channels and an air manifold (22) located in the first compartment of the engine crankcase (23).
The turbine is housed in the fourth motor compartment (12), the exhaust manifold of which located the annular regenerator (24). It is situated in the periphery of the exterior rotor vanes to collect the exhaust gases and it is connected at one end to the compressed air manifold (22) and at the other to the combustor (14). The reducing gear (28) which transmits the mechanical energy of the rotor to the power shaft (3), is located in the second (25) and third (26) motor compartment.
The combustor (14) is a reversible type combustor and is located outside the motor directly connected to the turbine inlet (10).
The interior rotor (2) is connected by its shaft directly to the compressor so that it can operate freely. The exterior rotor is connected by the reducing gear to the power shaft.
The engine casing is characterized by its simplicity and compactness. This is due to a number of factors, the location of the regenerator in the exhaust manifold, the exterior combustor, the rotation of the rotors one within the other and the short lengh of the shafts, all of which reduce the volume and weight of the motor.

## Claims

1. A turbomotor comprising:
- a crankcase;
- a stator free counterrotating outward-flow gas turbine consisting of an exterior reaction rotor (1) and an interior counterrotating reaction rotor (2) arranged within the exterior rotor (1),said rotors (1, 2) having concentrically arranged shafts mounted on bearings (11) within said crankcase and
- said exterior rotor (1) being connected to a power shaft (3);
- a ring of interior vanes (6) arranged on said interior rotor (2) and a ring of exterior vanes (5) arranged on said exterior rotor (1), said interior vanes (6) and said exterior vanes (5) having an opposing curvature; and
- a combustor (14) connected to a central inlet (10) of said turbine;
- characterised in that
- said interior rotor (2) is connected to a compressor (4);
- a regenerator (24) is located in said crankcase in the periphery of the ring of exterior vanes (5);
- said exterior rotor (1) is formed of two disks between which the ring of interior vanes (6) is arranged, an extension of one of said disks forming said central inlet (10); and
- guiding fins (9) are arranged on said interior rotor (2) to distribute the gas entering said turbine radially towards the vanes.

2. A turbomotor comprising:
- a crankcase;
- a stator free counterrotating outward-flow gas turbine consisting of an exterior reaction rotor (1) and an interior counterrotating reaction rotor (2) arranged within the exterior rotor (1),said rotors (1, 2) having concentrically arranged shafts mounted on bearings (11) within said crankcase and
- said exterior rotor (1) being connected to a power shaft (3);
- a ring of interior vanes (6) arranged on said interior rotor (2) and a ring of exterior vanes (5) arranged on said exterior rotor (1), said interior vanes (6) and said exterior vanes (5) having an opposing curvature; and
- a combustor (14) connected to a central inlet (10) of said turbine;
- characterised in that
- said interior rotor (2) is connected to a compressor (4);
- a regenerator (24) is located in said crankcase in the periphery of the ring of exterior vanes (5);
- each of said exterior rotor (1) and said interior rotor (2) is formed of a single disk on which the ring of vanes (6) is arranged;
- said central inlet (10) is fixed to said crankcase; and
- guiding fins (9) are arranged on said interior rotor (2) or on said crankcase to distribute the gas entering said turbine radially towards the vanes.

## Patentansprüche

1. Ein Turbomotor, der aus:
- einem Kurbelgehäuse;
- einer gegendrehenden Zentrifugal-Gasturbine ohne Stator, die aus einem äußeren Reaktionsrotor (1) und einem inneren gegendrehenden Reaktionsrotor (2) besteht, der innerhalb des äußeren Rotors (1) angeordnet ist, wobei die genannten Rotoren (1, 2) konzentrisch angeordnete Wellen besitzen, die auf Lagern (11) innerhalb des genannten Kurbelgehäuses eingebaut sind, und der genannte äußere Rotor (1) an eine Abtriebswelle (3) angeschlossen ist;
- einem Ring aus inneren Schaufeln (6), die auf dem genannten inneren Rotor (2) angebracht sind, und einem Ring äußerer Schaufeln (5), die auf dem genannten äußeren Rotor (1) angebracht sind, wobei die genannten inneren Schaufeln (6) und die genannten äußeren Schaufeln (5) eine gegensätzliche Krümmung aufweisen; und
- einer Brennkammer (14), die an einen zentralen Einlass (10) der genannten Turbine angeschlossen ist;
- besteht und dadurch gekennzeichnet ist, dass
- der genannte innere Rotor (2) an einen Verdichter (4) angeschlossen ist;
- ein Vorwärmer (24) sich im genannten Kurbelgehäuse am Rand des Rings von äußeren Schaufeln (5) befindet;
- der genannte äußere Rotor (1) aus zwei Scheiben gebildet wird, zwischen denen der Ring von äußeren Schaufeln (6) angeordnet ist, wobei ein Anbau an einer der genannten Scheiben den genannten zentralen Einlass (10) bildet; und
- Leitrippen (9) auf dem genannten inneren Rotor (2) angeordnet sind, um das in die genannte Turbine strömende Gas radial zu den Schaufeln zu verteilen.

2. Ein Turbomotor, der aus:
- einem Kurbelgehäuse;
- einer gegendrehenden Zentrifugal-Gasturbine ohne Stator, die aus einem äußeren Reaktionsrotor (1) und einem inneren gegendrehenden Reaktionsrotor (2) besteht, der innerhalb des äußeren Rotors (1) angeordnet ist, wobei die genannten Rotoren (1, 2) konzentrisch angeordnete Wellen besitzen, die auf Lagern (11) innerhalb des genannten Kurbelgehäuses eingebaut sind, und der genannte äußere Rotor (1) an eine Abtriebswelle (3) angeschlossen ist;
- einem Ring aus inneren Schaufeln (6), die auf dem genannten inneren Rotor (2) angebracht sind, und einem Ring äußerer Schaufeln (5), die auf dem genannten äußeren Rotor (1) angebracht sind, wobei die genannten inneren Schaufeln (6) und die genannten äußeren Schaufeln (5) eine gegensätzliche Krümmung aufweisen; und
- einer Brennkammer (14), die an einen zentralen Einlass (10) der genannten Turbine angeschlossen ist;
- besteht und dadurch gekennzeichnet ist, dass
- besteht und dadurch gekennzeichnet ist, dass;
- ein Vorwärmer (24) sich im genannten Kurbelgehäuse am Rand des Rings von äußeren Schaufeln (5) befindet;
- der genannte äußere Rotor (1) und der genannte innere Rotor (2) aus jeweils einer einzigen Scheibe bestehen, auf denen der Ring von Schaufeln (6) angeordnet ist;
- der genannte zentrale Einlass (10) am genannten Kurbelgehäuse befestigt ist; und
- Leitrippen (9) auf dem genannten inneren Rotor (2) oder dem genannten Kurbelgehäuse angeordnet sind, um das in die genannte Turbine strömende Gas radial zu den Schaufeln zu verteilen.

## Revendications

1. Un turbomoteur comprenant :
- un carter ;
- une turbine à gaz centrifuge à stator dégagé tournant en sens inverse, consistant en un rotor à réaction extérieur (1) et un rotor à réaction intérieur tournant en sens inverse (2), placé à l'intérieur du rotor extérieur (1), lesdits rotors (1, 2) ayant des arbres disposés concentriquement et montés sur des paliers (11) à l'intérieur dudit carter et ledit rotor extérieur (1) étant relié à un arbre moteur (3) ;
- une rangée d'aubes intérieures (6) disposées en anneau sur ledit rotor intérieur (2) et une rangée d'aubes extérieures (5) disposées en un anneau sur ledit rotor extérieur (1), lesdites aubes intérieures (6) et extérieures (5) présentant une courbure opposée ; et
- une chambre de combustion (14) reliée à l'admission centrale (10) de ladite turbine;
- caractérisé en ce que:
- ledit rotor intérieur (2) est relié à un compresseur (4);
- un régénérateur (24) est placé dans ledit carter à la périphérie de l'aubage extérieur (5);
- ledit rotor extérieur (1) est formé de deux disques entre lesquels l'aubage extérieur (6) est disposé, un prolongement de l'un de ces disques formant ladite admission centrale (10); et
- un distributeur (9) est disposé sur ledit rotor intérieur (2) pour distribuer radialement en direction des aubes le gaz entrant dans ladite turbine.

2. Un turbomoteur comprenant:
- un carter ;
- une turbine à gaz centrifuge à stator dégagé tournant en sens inverse, consistant en un rotor à réaction extérieur (1) et un rotor à réaction intérieur tournant en sens inverse (2), placé à l'intérieur du rotor extérieur (1), lesdits rotors (1, 2) ayant des arbres disposés concentriquement et montés sur des paliers (11) à l'intérieur dudit carter et ledit rotor extérieur (1) étant relié à un arbre moteur (3) ;
- une rangée d'aubes intérieures (6) disposées en anneau sur ledit rotor intérieur (2) et une rangée d'aubes extérieures (5) disposées en un anneau sur ledit rotor extérieur (1), lesdites aubes intérieures (6) et extérieures (5) présentant une courbure opposée ; et
- une chambre de combustion (14) reliée à l'admission centrale (10) de ladite turbine;
- caractérisé en ce que:
- ledit rotor intérieur (2) est relié à un compresseur (4);
- un régénérateur (24) est placé dans ledit carter à la périphérie de l'aubage extérieur (5);
- chacun desdits rotors extérieur (1) et intérieur (2) est formé d'un seul disque sur lequel l'aubage (6) est disposé;
- ladite admission centrale (10) est fixée audit carter ; et
- un distributeur (9) est disposé sur ledit rotor intérieur (2) ou sur ledit carter pour distribuer radialement en direction des aubes le gaz entrant dans ladite turbine.
